# EUROPÄISCHE PATENTSCHRIFT

(11) **EP 3 312 692 B1**
(45) Veröffentlichungstag und Bekanntmachung des Hinweises auf die Patenterteilung: **06.07.2022**
(21) Anmeldenummer: 16194525.8
(22) Anmeldetag: 19.10.2016
(51) Int. Cl.: G05B 19/418, G05B 19/042, H04W 12/08, G06F 21/31

(54) **BEDIENGERÄT UND VERFAHREN ZUR BEDIENUNG EINES MESSGERÄTS**
OPERATING DEVICE FOR A MEASURING DEVICE
APPAREIL DE COMMANDE POUR UN APPAREIL DE MESURE

(43) Veröffentlichungstag der Anmeldung: 25.04.2018
(73) Patentinhaber: VEGA Grieshaber KG, 77709 Wolfach (DE)
(72) Erfinder: FAIST, Fridolin, 77709 Oberwolfach (DE)
(74) Vertreter: Maiwald Patent- und Rechtsanwaltsgesellschaft mbH

(56) Entgegenhaltungen:
- DE-A1-102013 113 037
- DE-A1-102014 111 046
- DE-B3-102012 214 018

## Beschreibung

### Gebiet der Erfindung

Die Erfindung betrifft ein Bediengerät zum Bedienen eines Füllstandmessgerätes, eines Durchflussmessgerätes, eines Dichtemessgeräts und/oder eines Druckmessgerätes. Weiter betrifft die Erfindung die Verwendung eines Bediengerätes für ein Füllstandmessgerät, ein Durchflussmessgerät, ein Dichtemessgerät und/oder ein Druckmessgerät sowie eine Messanordnung mit einem Bediengerät. Des Weiteren betrifft die Erfindung ein Verfahren zum Bedienen eines Messgeräts, ein Programmelement für ein Bediengerät sowie ein computerlesbare Medium mit einem solchen Programmelement.

### Technischer Hintergrund der Erfindung

Messgeräte und/oder Feldgeräte in der Prozessautomation werden heute zunehmend in Netzwerke eingebunden und vernetzt. Auf diese Weise können die Messgeräte und/oder Feldgeräte über die Netzwerke und/oder über das Internet bedient werden. Aus diesem Grund kann es erforderlich sein, die an ein Netzwerk angebundenen Messgeräte und/oder Feldgeräte gegenüber Fremdzugriffen unberechtigter Personen zu schützen.

In modernen Messgeräten und/oder Feldgeräten sind daher Sicherheitsmechanismen zum Schutz gegenüber Fremdzugriffen eingebaut. Die Sicherheitsmechanismen reichen dabei von einer einfachen Bediensperre für eine Vorort-Bedienung des jeweiligen Gerätes, wie etwa eine Eingabe einer Zugriffskennung an einem Display mit Tasten, bis hin zu verschlüsselter Kommunikation mit Authentifizierungsverfahren und gegebenenfalls nachgelagerter Zugriffssperre, etwa auf Einstellungswerte der Geräte.

DE 10 2012 214018 B3 beschreibt ein Verfahren und ein Zugangskontrollsystem zur Autorisierung eines Nutzers durch ein tragbares Kommunikationsgerät an einem Feldgerät.

DE 10 2014 111046 A1 beschreibt ein Verfahren zum Bedienen eines Feldgeräts. Das Feldgerät weist mehrere Sicherheitsstufen auf, in welchen unterschiedliche Einstellungen vorgenommen werden können.

DE 10 2013 113037 A1 beschreibt ein Verfahren zum Bedienen eines Feldgeräts. Zumindest ein Kommando entsprechend einem Kommunikationsprotokoll zur Bedienung des Feldgerätes wird von einer übergeordneten Einheit an ein Feldgerät übertragen.

### Zusammenfassung der Erfindung

Es ist eine Aufgabe der Erfindung, ein Bediengerät bereitzustellen, mit welchem Füllstandmessgeräte, Durchflussmessgeräte, Dichtemessgeräte und/oder Druckmessgeräte zuverlässig und benutzerfreundlich bedient werden können.

Diese Aufgabe wird durch die Merkmale der unabhängigen Ansprüche gelöst. Weiterbildungen der Erfindung ergeben sich aus den abhängigen Ansprüchen und der nachfolgenden Beschreibung.

Die Erfindung ist in den unabhängigen Patentansprüchen definiert. Im Speziellen betrifft die Erfindung ein Verfahren zum Bedienen eines Messgeräts gemäß Patentanspruch 1 sowie ein Bediengerät zum Bedienen eines Messgeräts gemäß Patentanspruch 2, wobei das Messgerät ein Füllstandmessgerät, ein Durchflussmessgerät, ein Dichtemessgerät und/oder ein Druckmessgerät ist. Ferner betrifft die Erfindung eine Messanordnung mit einem solchen Bediengerät (Patentanspruch 8), die Verwendung eines solchen Bediengeräts (Patentanspruch 11), ein Programmelement (Patentanspruch 12) und ein computerlesbares mit einem solchen Programmelement (Patentanspruch 13).

Ein Aspekt der Offenbarung betrifft ein Bediengerät zum Bedienen eines Messgeräts. Das Bediengerät kann beispielsweise ein Personal Computer (PC), ein Laptop, ein Smartphone, ein Tablet, ein mobiles Endgerät und/oder ein Benutzergerät sein. Das Bedienen des Messgeräts kann insbesondere ein Steuern, ein Kontrollieren, ein Initialisieren, ein Abrufen von Diagnosedaten, ein Abrufen von Messdaten, ein Konfigurieren und/oder ein Parametrieren, d.h. ein Ändern von Einstellwerten, des Messgeräts umfassen. Bei dem Messgerät handelt es sich um ein Füllstandmessgerät, ein Durchflussmessgerät, ein Dichtemessgerät und/oder ein Druckmessgerät.

Das Bediengerät weist eine Kommunikationsanordnung auf, welche ein erstes Kommunikationsmodul zur Kommunikation des Bediengeräts mit einem Server und ein zweites Kommunikationsmodul zur Kommunikation des Bediengeräts mit dem Messgerät aufweist. Weiter weist das Bediengerät ein Schlüsselverwaltungsmodul auf, in welchem Zugriffsinformationsdaten für einen Zugriff des Bediengeräts auf das Messgerät hinterlegt sind. Der Zugriff des Bediengeräts auf das Messgerät kann etwa ein Freigeben einer Kommunikation, ein Herstellen einer Datenverbindung und/oder ein Bereitstellen eines Datenaustausches zwischen Messgerät und Bediengerät umfassen. Ferner weist das Bediengerät ein Authentifizierungsmodul zur Authentifizierung eines Benutzers des Bediengeräts mittels einer Benutzerkennung auf. Weiter weist das Bediengerät eine Steuereinheit auf. Die Steuereinheit kann insbesondere zur Steuerung der Kommunikationsanordnung ausgeführt sein und/oder eine Recheneinheit, wie beispielswiese eine CPU (Central Processing Unit), aufweisen. Dabei ist die Steuereinheit dazu eingerichtet, nach Authentifizierung des Benutzers mittels des Authentifizierungsmoduls die in dem Schlüsselverwaltungsmodul hinterlegten Zugriffsinformationsdaten mit auf dem Server hinterlegten Zugriffsinformationsdaten abzugleichen. Mit anderen Worten kann die Steuereinheit dazu eingerichtet sein, nach erfolgreicher Authentifizierung des Benutzers mittels des Authentifizierungsmoduls die in dem Schlüsselverwaltungsmodul hinterlegten Zugriffsinformationsdaten mit auf dem Server, beispielsweise in einer Datenbank des Servers, gespeicherten serverseitigen Zugriffsinformationsdaten zu vergleichen. Insbesondere kann die Steuereinheit dazu eingerichtet sein, basierend auf dem Vergleich der in dem Schlüsselverwaltungsmodul hinterlegten Zugriffsinformationsdaten mit den auf dem Server hinterlegten Zugriffsinformationsdaten zu ermitteln, ob die auf dem Bediengerät hinterlegten Zugriffsinformationsdaten auf einem aktuellen Stand und/oder vollständig sind.

Auf dem Server kann eine Mehrzahl von Zugriffsinformationsdaten für eine Mehrzahl von Messgeräten hinterlegt sein. Durch Eingabe der Benutzerkennung kann der Benutzer so in vorteilhafter Weise Zugriff auf alle auf dem Server hinterlegten und dem Benutzer zugeordneten Zugriffsinformationsdaten erhalten. Insbesondere eine Bedienung einer Vielzahl von Messgeräten, beispielsweise in einer großen Industrieanlage, kann so für den Benutzer wesentlich vereinfacht sein.

Die Kommunikation des Bediengerätes über die Kommunikationsanordnung kann beispielsweise einen Datenaustausch und/oder ein Herstellen einer Datenverbindung umfassen. Die Kommunikation kann dabei drahtgebunden oder drahtlos erfolgen. Dazu kann das erste Kommunikationsmodul und/oder das zweite Kommunikationsmodul über eine entsprechende Schnittstelle verfügen, wie beispielsweise eine Ethernet-, eine LAN- (Local Area Network), eine WLAN-(Wireless Local Area Network), eine GPRS- (General Packet Radio Service), eine LTE- (Long Term Evolution), eine 3G-, eine Bluetooth-, eine 4...20mA und/oder eine Infrarot-Schnittstelle. Auch kann das Bediengerät über einen Feldbus, wie beispielsweise einen HART Bus, einen Profibus, einen FF-Bus, einen Modbus, einen seriellen Bus und/oder einen parallelen Bus mit dem Messgerät und/oder mit dem Server verbunden werden. Auch andere Verbindungen, z.B. über einen IO-Link und/oder eine USB-Verbindung, sind denkbar.

Die in dem Schlüsselverwaltungsmodul hinterlegten Zugriffsinformationsdaten können beispielsweise ein Passwort, eine persönliche Identifikationsnummer (PIN) und/oder einen PSK (pre-shared key) umfassen. Das Schlüsselverwaltungsmodul kann zu diesem Zweck einen Datenspeicher bzw. einen Speicher aufweisen, in welchem die Zugriffsinformationsdaten gespeichert sein können. Die Benutzerkennung zur Authentifizierung des Benutzers kann beispielsweise einen Benutzernamen, ein Passwort und/oder einen Fingerabdruck umfassen. Die Authentifizierung des Benutzers an dem Authentifizierungsmodul kann beispielsweise eine Anmeldung und/oder einen Login des Benutzers an dem Bediengerät umfassen. Dazu kann die Authentifizierung eine Eingabe der Benutzerkennung über eine Bedienschnittstelle, etwa eine Tastatur und/oder ein Display, des Bediengeräts sowie ein Vergleichen der eingegebenen Benutzerkennung mit der in dem Authentifizierungsmodul hinterlegten Benutzerkennung umfassen.

Die Erfindung kann als auf den nachfolgend beschriebenen Ideen und Erkenntnissen beruhend angesehen werden. Um eine Industrieanlage mit einer Mehrzahl von Messgeräten und/oder Feldgeräten zur Prozessautomation vor Fremdzugriff zu schützen und so die Industrieanlage sicher betreiben zu können, kann es erforderlich sein, dass der Benutzer die in den Messgeräten zur Verfügung gestellten Authentifizierungsverfahren und eventuell Benutzerverwaltungen sowie weitere Zugriffsschutzfunktionen aktiviert. Dies kann zur Folge haben, dass alle Benutzer, wie z.B. Mitarbeiter bzw. Angestellte, welche sich Zugriff auf die Messgeräte verschaffen wollen, Kenntnis von diversen PINs, Benutzernamen und/oder Kennwörtern haben müssen. Dies mag überschaubar bleiben, sofern nur wenige Messgeräte in der Industrieanlage eingesetzt werden, jedoch mag es unübersichtlich werden, wenn eine Vielzahl von Messgeräten in der Industrieanlage eingesetzt und/oder betreut werden. Um diesem Umstand entgegenzuwirken, können beispielsweise PINs und/oder Kennwörter lokal auf einem Bedienrechner gespeichert werden. Die Speicherung kann zum Beispiel in Form einer Zuordnungstabelle von PINs und Kennwörtern zu Seriennummern der Messgeräte erfolgen. Dies hat den Vorteil, dass der Benutzer, wenn er sich zum wiederholten Mal mit einem Messgerät verbinden möchte, die erforderliche Authentifizierungsinformation bzw. die zugehörigen Authentifizierungsinformationsdaten nicht mehr eingeben muss.

Zunehmend besitzen Benutzer von Messgeräten jedoch mehrere Rechner, Smartphones, Tablets und/oder weitere Bediengeräte, mit welchen die Messgeräte bedient werden können. Somit kann es erforderlich sein, dass die Zugriffsinformationsdaten auf jedem der Bediengeräte eingegeben und/oder gespeichert sind. Dadurch kann sich auch auf jedem der Bediengeräte eine unterschiedlich gute Abdeckung der Zugriffsinformationsdaten einstellen. Mithilfe der vorliegenden Offenbarung kann in vorteilhafter Weise ein zentrales Benutzerkonto auf dem Server für den Benutzer bereitgestellt sein, in welchem alle Zugriffsinformationsdaten zu den dem Benutzer zugeordneten Messgeräten hinterlegt sein können. Dadurch kann sichergestellt sein, dass der Benutzer unabhängig davon, mit welchem Bediengerät er gerade arbeitet, sämtliche Zugriffsinformationsdaten für sämtliche ihm bzw. seinem Benutzerkonto zugeordnete Messgeräte zur Verfügung hat. Des Weiteren kann der Benutzer dadurch in vorteilhafter Weise jedes beliebige Bediengerät verwenden. Auch kann dem Benutzer auf diese Weise automatisch Zugriff auf alle ihm bzw. seinem Benutzerkonto zugeordneten Messgeräte, die er jemals bedient hat, gewährt werden.

Gemäß einer Ausführungsform der Offenbarung ist die Steuereinheit dazu eingerichtet, zumindest einen Teil der in dem Schlüsselverwaltungsmodul hinterlegten Zugriffsinformationsdaten an den Server zu übermitteln und/oder zu übertragen. Insbesondere kann die Steuereinheit dazu eingerichtet sein, sämtliche in dem Schlüsselverwaltungsmodul hinterlegten Zugriffsinformationsdaten an den Server zu übermitteln.

Gemäß einer Ausführungsform der Offenbarung ist die Steuereinheit dazu eingerichtet, zumindest einen Teil der auf dem Server hinterlegten Zugriffsinformationsdaten, insbesondere sämtliche auf dem Server hinterlegten Zugriffsinformationsdaten, von dem Server abzurufen und in dem Schlüsselverwaltungsmodul zu hinterlegen. Auf diese Weise kann sichergestellt sein, dass auf dem Bediengerät alle auf dem Server hinterlegten Zugriffsinformationsdaten für alle dem Benutzer zugeordneten Messgeräte gespeichert und/oder vorhanden sind, so dass der Benutzer mit dem Bediengerät alle ihm zugeordneten Messgeräte bedienen kann.

Gemäß einer Ausführungsform der Offenbarung ist die Steuereinheit dazu eingerichtet, bei einem erstmaligen Verbinden des Bediengeräts mit dem Messgerät, die Zugriffsinformationsdaten für das Messgerät in dem Schlüsselverwaltungsmodul zu hinterlegen. Mit anderen Worten kann die Steuereinheit dazu eingerichtet sein, bei einem initialen Verbinndungsaufbau mit einem Messgerät die diesem Messgerät zugeordneten Zugriffsinformationsdaten in dem Schlüsselverwaltungsmodul zu speichern.

Gemäß einer Ausführungsform der Offenbarung ist die Steuereinheit dazu eingerichtet, die in dem Schlüsselverwaltungsmodul hinterlegten Zugriffsinformationsdaten und die auf dem Server hinterlegten Zugriffsinformationsdaten unter Berücksichtigung eines Zeitstempels der Zugriffinformationsdaten zu synchronisieren und/oder zu aktualisieren. Die Zugriffsinformationsdaten können mit einer Zeitinformation bzw. einem Zeitstempel, z.B. dem Zeitpunkt der Speicherung der Zugriffsinformationsdaten, auf dem Bediengerät und/oder auf dem Server hinterlegt sein. Während des Abgleichens der in dem Schlüsselverwaltungsmodul hinterlegten mit den auf dem Server hinterlegten Zugriffsinformationsdaten kann die Steuereinheit die entsprechenden Zeitstempel vergleichen und so ermitteln, welche der Zugriffsinformationsdaten aktueller sind. Im Rahmen der Synchronisierung können auf diese Weise die zeitälteren Zugriffsinformationsdaten mit den aktuellen ersetzt werden, so dass sichergestellt sein kann, dass der Benutzer mittels der aktuellen Zugriffsinformationsdaten Zugriff auf das entsprechende Messgerät erhalten kann.

Gemäß einer Ausführungsform der Offenbarung umfassen die Zugriffsinformationsdaten eine Zugriffskennung für eine Freigabe des Messgeräts. Die Zugriffskennung kann beispielsweise eine PIN, ein Zahlencode, ein Buchstabencode, ein Zahlen-Buchstabencode und/oder eine andere Kennung sein, bei deren Eingabe das Messgerät freigegeben werden kann. Auch kann vorgesehen sein, dass durch Eingabe der Zugriffskennung das Messgerät gesperrt werden kann. In diesem Zusammenhang kann die Freigabe des Messgerätes bedeuten, dass Daten, etwa Diagnosedaten und/oder Messdaten, aus dem Messgerät abgerufen und/oder Daten in dem Messgerät gespeichert werden können, etwa zum Ändern eines Einstellwertes des Messgerätes.

Gemäß einer Ausführungsform der Offenbarung umfassen die Zugriffsinformationsdaten eine Verbindungskennung zum Herstellen einer Kommunikationsverbindung zwischen dem Bediengerät und dem Messgerät. Die Kommunikationsverbindung kann etwa eine Bluetoothverbindung, eine Netzwerkverbindung und/oder eine Feldbusverbindung sein. Die Verbindungskennung kann etwa eine PIN, ein Zahlencode, ein Buchstabencode, ein Zahlen-Buchstabencode und/oder eine andere Kennung zum Herstellen einer der Kommunikationsverbindung sein. Auch kann die Verbindungskennung ein PSK (Pre-Shared Key) sein, mit Hilfe dessen das Bediengerät mit einem Netzwerk verbunden werden kann, an welches auch das Messgerät angebunden ist.

Die Zugriffsinformationsdaten können sowohl die Zugriffskennung für die Freigabe des Messgerätes als auch die Verbindungskennung zum Herstellen der Kommunikationsverbindung umfassen. Auf diese Weise kann sichergestellt sein, dass der Benutzer nach Eingabe der Benutzerkennung vollständigen Zugriff auf die Zugriffsinformationsdaten und somit Zugriff auf das Messgerät erlangen kann.

Gemäß einer Ausführungsform der Offenbarung ist die Steuereinheit dazu eingerichtet, basierend auf einer Identifikationsnummer und/oder basierend auf einer Typenbezeichnung des Messgeräts die dem Messgerät zugeordneten Zugriffsinformationsdaten in dem Schlüsselverwaltungsmodul zu ermitteln. Die Identifikationsnummer kann beispielsweise eine Seriennummer und/oder eine Herstellerkennung des Messgeräts umfassen. Die Typenbezeichnung kann etwa eine Kennung und/oder einen Code enthalten, basierend auf welchem die Steuereinheit ermitteln kann, ob es sich bei dem Messgerät um ein Füllstandmessgerät, ein Durchflussmessgerät, ein Dichtemessgerät und/oder ein Druckmessgerät handelt. Die Identifikationsnummer und/oder die Typenbezeichnung eines Messgeräts können dazu mit den entsprechenden Zugriffsinformationsdaten dieses Messgeräts in dem Schlüsselverwaltungsmodul hinterlegt sein, beispielswiese in Form einer Tabelle, einer Zuordnungstabelle und/oder einer Look-Up Table. Die Steuereinheit kann etwa dazu eingerichtet sein, die Identifikationsnummer und/oder die Typenbezeichnung eines zu bedienenden Messgeräts abzufragen, mit den in dem Schlüsselverwaltungsmodul hinterlegten Identifikationsnummern und/oder Typenbezeichnungen zu vergleichen und so die dem zu bedienenden Messgerät zugeordneten Zugriffsinformationsdaten zu ermitteln.

Gemäß einer Ausführungsform der Offenbarung ist die Steuereinheit ferner dazu eingerichtet zu ermitteln, ob sich das Messgerät in Reichweite des Bediengeräts befindet. Die Steuereinheit kann etwa dazu eingerichtet sein, über das Kommunikationsmodul eine Umgebung des Bediengerätes nach Messgeräten zu durchsuchen, mit welchen das Bediengerät verbunden werden kann. Weiter ist die Steuereinheit dazu eingerichtet, eine Identifikationsnummer und/oder eine Typenbezeichnung desjenigen Messgeräts zu ermitteln, abzufragen und/oder abzurufen, welches sich in Reichweite des Bediengerätes befindet. Die Steuereinheit kann dazu eine entsprechende Anfrage an das Messgerät schicken und das Messgerät kann als Antwort auf die Anfrage seine Identifikationsnummer und/oder seine Typenbezeichnung an das Bediengerät übermitteln. Die Steuereinheit kann auch die Identifikationsnummern und/oder die Typenbezeichnungen mehrerer in Reichweite befindlicher Messgeräte ermitteln. Weiter ist die Steuereinheit dazu eingerichtet, automatisch und/oder selbsttätig die dem Messgerät zugeordneten Zugriffsinformationsdaten an das Messgerät zu übermitteln. Dazu kann die Steuereinheit das Schlüsselverwaltungsmodul nach der Identifikationsnummer und/oder der Typenbezeichnung des Messgerätes durchsuchen und so die dem Messgerät zugeordneten Zugriffsinformationsdaten ermitteln. Die Steuereinheit kann dann die dem Messgerät zugeordnete Verbindungskennung zum Herstellen der Kommunikationsverbindung zu dem Messgerät und/oder die dem Messgerät zugeordnete Zugriffskennung an das Messgerät übermitteln, um Zugriff auf das Messgerät zu erhalten. Ferner ist die Steuereinheit dazu eingerichtet, Diagnosedaten zur Diagnose des Messgeräts und/oder Messdaten von dem Messgerät abzurufen. Die Diagnosedaten können beispielsweise Werte von Betriebsparametern des Messgerätes umfassen, mit Hilfe derer die Steuereinheit einen Betriebszustand des Messgerätes, etwa einen Standby-Betrieb, ermitteln kann. Auch können die Diagnosedaten Fehlerdaten, z.B. einen Fehlercode, umfassen, basierend auf welchen die Steuereinheit eine Fehlfunktion des Messgerätes feststellen kann. Auch können die Diagnosedaten Einstellwerte bzw. Werte von Betriebsparametern, wie z.B. die Dauer eines Messintervalls, eine Messrate und/oder einen Messzeitpunkt, umfassen.

Gemäß einer Ausführungsform der Offenbarung ist die Steuereinheit dazu eingerichtet, eine Parametrierung des Messgeräts vorzunehmen und/oder Messdaten von dem Messgerät abzurufen. Die Steuereinheit kann zur Parametrierung Werte von Betriebsparametern, wie z.B. die Dauer eines Messintervalls, eine Messrate und/oder einen Messzeitpunkt, in dem Messgerät ändern. Auch kann die Steuereinheit beispielsweise eine Echokurve, einen Füllstandwert, einen Füllstandmesswert, eine Füllhöhe, einen Druckwert, einen Durchflusswert, einen Fließgeschwindigkeitswert von dem Messgerät abrufen. Auch kann die Steuereinheit basierend auf den Messdaten eine Plausibilitätskontrolle von Messungen durchführen. Auch kann die Steuereinheit dazu eingerichtet sein, das Messgerät anzuweisen, eine neue Messung durchzuführen.

Ein weiterer Aspekt der Offenbarung betrifft eine Messanordnung zum Erfassen von Füllstandmesswerten, Druckmesswerten oder Durchflussmesswerten. Die Messanordnung weist ein Bediengerät, so wie voranstehend und nachfolgend beschrieben, auf. Weiter weist die Messanordnung eine Mehrzahl von Messgeräten, welche ein Füllstandmessgerät, ein Durchflussmessgerät, ein Dichtemessgerät und/oder ein Druckmessgerät umfassen, und einen Server auf. Der Server weist ein Benutzerkontomodul auf, in welchem ein Benutzerkonto hinterlegt ist, welches einem Benutzer des Bediengeräts zugeordnet ist und in welchen Zugriffsinformationsdaten für die dem Benutzer zugeordneten Messgeräte gespeichert sind. Auf dem Server kann eine Mehrzahl von Benutzerkonten hinterlegt und/oder verwaltet werden, welche jeweils einem Benutzer zugeordnet sein können.

Merkmale und Elemente des Bediengerätes, so wie voranstehend und nachfolgend beschrieben, können Merkmale und Elemente der Messanordnung, so wie voranstehend und nachfolgend beschrieben, sein.

Gemäß einer Ausführungsform der Offenbarung ist die Steuereinheit des Bediengeräts dazu eingerichtet, insbesondere nach Authentifizierung des Benutzers mittels des Authentifizierungsmoduls, die Benutzerkennung des Benutzers des Bediengeräts an den Server zu übermitteln, wobei der Server dazu eingerichtet ist, das dem Benutzer zugeordnete Benutzerkonto freizugeben und sämtliche in dem Benutzerkonto hinterlegten Zugriffsinformationsdaten an das Bediengerät zu übermitteln. Auf diese Weise können dem Benutzer unabhängig von dem Bediengerät, welches er aktuell in Verwendung hat, stets alle ihm bzw. seinem Benutzerkonto zugeordneten Zugriffsinformationsdaten bereitgestellt werden. Auch muss der Benutzer so beispielsweise bei einem Wechsel oder einem Tausch des Bediengeräts nicht alle Zugriffsinformationsdaten für alle Messgeräte erneut eingeben, sondern kann diese aus dem auf dem Server hinterlegten Benutzerkonto abrufen. Insgesamt kann so das Bedienen der Messgeräte mit dem Bediengerät für den Benutzer wesentlich vereinfacht und somit benutzerfreundlich gestaltet werden, da dieser mit Eingabe der Benutzerkennung Zugriff auf alle Zugriffsinformationsdaten und somit Zugriff auf alle ihm zugeordnete Messgeräte erhalten kann.

Gemäß einer Ausführungsform der Offenbarung weist der Server ein Benutzersteuermodul mit einer Benutzerschnittstelle auf, über welche die Benutzerkonten verwaltet und/oder konfiguriert werden können. Beispielsweise kann ein Benutzer mit Hilfe eines PCs über das Internet auf dem Server ein Benutzerkonto anlegen, konfigurieren und darin Zugriffsinformationsdaten für Messgeräte speichern, welche er anschließend mit einem Bediengerät abrufen kann. Auch kann beispielsweise ein Betreiber einer Industrieanlage für unterschiedliche Benutzer (z.B. Angestellte) zentral auf dem Server jeweils ein Benutzerkonto anlegen, in welchem unterschiedliche Messgeräte verwaltet sind. Zusätzlich können Zugriffsinformationsdaten für eines oder mehrere Messgeräte bestimmten Benutzergruppen zugeordnet werden, wie besipielswesie einem Kunden und/oder dessen Angestellten. Dies erlaubt dann die Weitergabe von ganzen Sammlungen und/oder Kollektionen von Zugriffsinformationsdaten (d.h. einer Mehrzahl von Zugriffsinformationsdaten), insbesondere für eine Mehrzahl von Messgeräten, an weitere Benutzer, in dem diese beispielsweise in die Benutzergruppe aufgenommen werden.

Ein weiterer Aspekt der Offenbarung betrifft die Verwendung eines Bediengeräts zum Bedienen eines Füllstandmessgeräts, eines Durchflussmessgeräts, eines Dichtemessgeräts und/oder eines Druckmessgerätes, so wie voranstehend und nachfolgend beschrieben.

Ein weiterer Aspekt der Offenbarung betrifft ein Verfahren zum Bedienen eines Messgeräts mit einem Bediengerät. Das Bedienen kann insbesondere ein Steuern, ein Kontrollieren, ein Initialisieren, ein Abrufen von Diagnosedaten, ein Abrufen von Messdaten, ein Konfigurieren und/oder ein Parametrieren des Messgeräts umfassen. Das Verfahren weist die folgenden Schritte auf:
- Authentifizieren, an dem Bediengerät, eines Benutzers mittels einer Benutzerkennung,
- Ermitteln, mit dem Bediengerät, einer Identifikationsnummer des Messgeräts,
- Abgleichen von in einem Schlüsselverwaltungsmodul des Bediengeräts hinterlegten und dem Messgerät zugeordneten Zugriffsinformationsdaten mit auf einem Server hinterlegten Zugriffsinformationsdaten, wobei zum Abgleichen der Zugriffsinformationsdaten die Benutzerkennung und die Identifikationsnummer des Messgeräts von dem Bediengerät an den Server übermittelt werden,
- Herstellen einer Kommunikationsverbindung zwischen dem Bediengerät und dem Messgerät, insbesondere unter Verwendung der Zugriffsinformationsdaten und/oder durch Übermitteln der Zugriffsinformationsdaten an das Messgerät, und
- Abrufen von Diagnosedaten des Messgeräts.

Merkmale und Elemente des Bediengeräts und/oder der Messanordnung, so wie voranstehend und nachfolgend beschrieben, können Merkmale und Schritte des Verfahrens, so wie voranstehend und nachfolgend beschrieben, sein und umgekehrt.

Ein weiterer Aspekt der Offenbarung betrifft ein Programmelement, das, wenn es auf einer Steuereinheit eines Bediengeräts ausgeführt wird, das Bediengerät anweist, die Schritte des Verfahrens, so wie voranstehend und nachfolgend beschrieben, auszuführen.

Ein weiterer Aspekt der Offenbarung betrifft ein computerlesbares Medium, auf dem ein Programmelement gespeichert ist, das, wenn es auf einer Steuereinheit eines Bediengeräts ausgeführt wird, das Bediengerät anweist, die Schritte des Verfahrens, so wie voranstehend und nachfolgend beschrieben, auszuführen.

Im Folgenden werden Ausführungsbeispiele der Offenbarung unter Bezugnahme auf die beigefügten Figuren beschrieben. Dabei können gleiche Bezugszeichen gleiche, gleichwirkende oder ähnliche Elemente bezeichnen.

### Kurze Beschreibung der Figuren

Fig. 1 zeigt eine Messanordnung gemäß einem Ausführungsbeispiel der Offenbarung.
Fig. 2 illustriert einen Server für eine Messanordnung gemäß einem Ausführungsbeispiel der Offenbarung.
Fig. 3 illustriert ein Bediengerät gemäß einem Ausführungsbeispiel der Offenbarung.
Fig. 4 zeigt eine Messanordnung gemäß einem Ausführungsbeispiel der Offenbarung.
Fig. 5 zeigt eine Messanordnung gemäß einem Ausführungsbeispiel der Offenbarung.
Fig. 6 zeigt ein Flussdiagramm zur Illustration von Schritten eines Verfahrens zum Bedienen eines Messgeräts gemäß einem Ausführungsbeispiel der Offenbarung.

Die Darstellungen in den Figuren sind lediglich schematisch und nicht maßstabsgetreu.

### Detaillierte Beschreibung von Ausführungsbeispielen

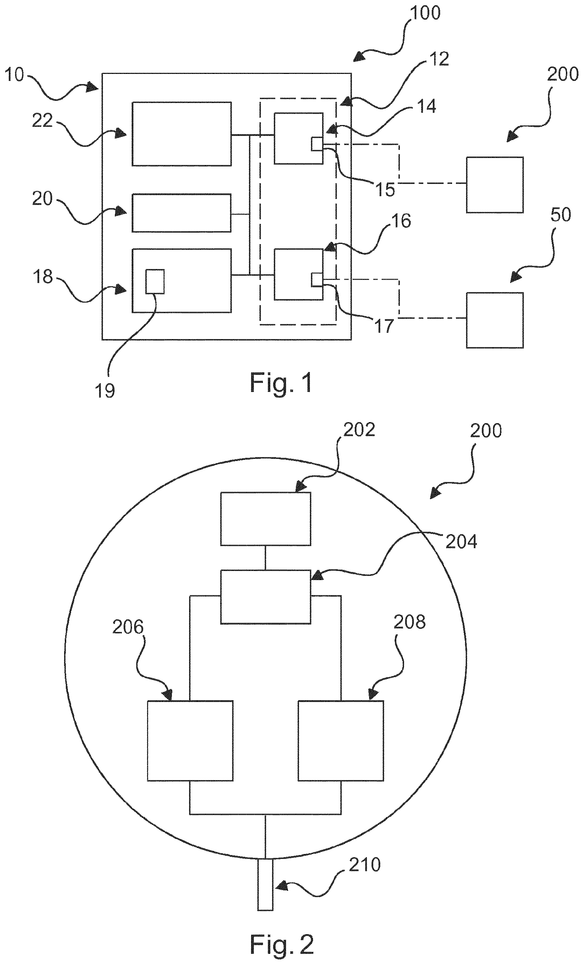

Fig. 1 zeigt eine Messanordnung 100 mit einem Bediengerät 10 zum Bedienen eines Messgerätes 50, insbesondere eines Füllstandmessgeräts, eines Durchflussmessgeräts, eines Dichtemessgeräts und/oder eines Druckmessgeräts. Bei dem Bediengerät 10 kann es sich etwa um einen PC, ein Laptop, ein Smartphone, ein Tablet, einen Tablet-PC, ein mobiles Endgerät und/oder ein anderes Benutzergerät handeln.

Das Bediengerät 10 weist eine Kommunikationsanordnung 12 mit einem ersten Kommunikationsmodul 14 und einem zweiten Kommunikationsmodul 16 auf. Das erste Kommunikationsmodul 14 ist dabei zur Kommunikation des Bediengeräts 10 mit einem Server 200, insbesondere über eine Netzwerkverbindung und/oder das Internet, eingerichtet. Dazu weist das erste Kommunikationsmodul 14 eine Schnittstelle 15 auf, z.B. eine Ethernet-, LAN-, WLAN, GPRS-, LTE- und/oder 3G-Schnittstelle. Das zweite Kommunikationsmodul 16 ist zur Kommunikation des Bediengeräts 10 mit dem Messgerät 50 ausgeführt, beispielsweise über eine Bluetoothverbindung, eine Feldbusverbindung, eine Netzwerkverbindung und/oder eine andere geeignete Verbindung. Dazu verfügt auch das zweite Kommunikationsmodul 16 über eine geeignete Schnittstelle 17.

Weiter weist das Bediengerät 10 ein Schlüsselverwaltungsmodul 18 auf, in welchem Zugriffsinformationsdaten für einen Zugriff des Bediengeräts 10 auf das Messgerät 50 hinterlegt sind. Die Zugriffsinformationsdaten können beispielsweise in einem Datenspeicher 19 bzw. Speicher des Schlüsselverwaltungsmoduls 18 hinterlegt und/oder gespeichert sein. Die Zugriffsinformationsdaten können dabei eine Zugriffskennung für eine Freigabe des Messgeräts 50 und/oder eine Verbindungskennung zum Herstellen der Kommunikationsverbindung des Bediengeräts 10 mit dem Messgerät 50 über das zweite Kommunikationsmodul 16 umfassen.

In dem Schlüsselverwaltungsmodul 18 können Zugriffsinformationsdaten für sämtliche einem Benutzer des Bediengerätes 10 zugeordneten Messgeräte 50 und/oder Feldgeräte 50 hinterlegt sein. Beispielsweise können die Messgeräte 50 jeweils mit einer Identifikationsnummer, z.B. einer Seriennummer, und/oder einer Typenbezeichnung in dem Schlüsselverwaltungsmodul 18 verwaltet und/oder referenziert sein. Die für das Herstellen einer Kommunikationsverbindung zu dem jeweiligen Messgerät 50 erforderliche Verbindungskennung, wie etwa eine PIN für eine Bluetoothverbindung oder einen PSK für eine Netzwerkverbindung, sowie die Zugriffskennung können ebenso für jedes der Messgeräte 50 in dem Schlüsselverwaltungsmodul 18 hinterlegt sein. Die Zugriffskennungen und die Verbindungskennungen können dabei den Identifikationsnummern und/oder Typenbezeichnungen der jeweiligen Messgeräte 50 zugeordnet sein, d.h. in dem Schlüsselverwaltungsmodul 18 kann eine Zuordnungstabelle mit Identifikationsnummer, Verbindungskennung, Zugriffskennung und/oder Typenbezeichnung hinterlegt sein. Die Zugriffskennung kann beispielsweise eine PIN zur Freigabe sein. Messgeräte 50 neuerer Generation können überdies für die Authentifizierung z. B. 20-stellige PSK Codes (Pre-Shared Keys) erfordern, welche ebenso als Zugriffskennung hinterlegt sein können. Wieder andere Messgeräte 50 bieten selbst eine weitere Benutzerverwaltung, die es gestattet, verschiedene Rechte für die Messgerätebedienung zu steuern. Derartige Messgeräte 50 erfordern dann für das Freischalten der Bedienung die Angabe eines Benutzers bzw. eines Benutzernamens mit einem Passwort bzw. Kennwort. All diese Zugriffsinformationsdaten können als Zugriffskennung und/oder Verbindungskennung in dem Schlüsselverwaltungsmodul 18 hinterlegt sein.

Ferner weist das Bediengerät 10 ein Authentifizierungsmodul 20 zur Authentifizierung eines Benutzers des Bediengeräts 10 mittels einer Benutzerkennung, wie z.B. einem Benutzernamen, einer PIN und/oder einem Fingerabdruck, auf.

Des Weiteren verfügt das Bediengerät 10 über eine Steuereinheit 22, welche beispielsweise eine CPU (Central Processing Unit) umfassen kann. Die Steuereinheit 22 ist insbesondere dazu eingerichtet, einen Datenaustausch zwischen der Kommunikationsanordnung 12, dem Schlüsselverwaltungsmodul 18, dem Authentifizierungsmodul 20, dem Server 200 und/oder dem Messgerät 50 zu steuern.

Das Bedienen des Messgeräts 50 mit dem Bediengerät 10 der Messanordnung 100 kann wie nachfolgend zusammengefasst erfolgen. Der Benutzer des Bediengeräts 10 gibt die Benutzerkennung an dem Bediengerät 10, beispielsweise über eine Tastatur und/oder ein Display des Bediengeräts 10, ein. Die vom Benutzer eingegebene Benutzerkennung wird anschließend mit der im Authentifizierungsmodul 20 hinterlegten Benutzerkennung verglichen. Bei Übereinstimmung der Benutzerkennungen erhält der Benutzer unter anderem Zugriff auf die im Schlüsselverwaltungsmodul 18 hinterlegten Zugriffsinformationsdaten. Das Bediengerät 10 ist zudem dazu eingerichtet, zu ermitteln, ob sich das Messgerät 50 in Reichweite des Bediengeräts 10 befindet. Ferner ist das Bediengerät 10 dazu eingerichtet, eine Identifikationsnummer, etwa eine Seriennummer, und/oder eine Typenbezeichnung des Messgeräts 50 von dem Messgerät 50 abzufragen. Basierend auf der ermittelten Identifikationsnummer und/oder der Typenbezeichnung ermittelt die Steuereinheit 22 die dem Messgerät 50 zugeordneten und in dem Schlüsselverwaltungsmodul 18 hinterlegten Zugriffsinformationsdaten. Diese Zugriffsinformationsdaten werden dann über das zweite Kommunikationsmodul 16 an das Messgerät 50 übermittelt, so dass der Benutzer Zugriff auf das Messgerät 50 erhält. Über das Bediengerät 10 kann der Benutzer nun Diagnosedaten und/oder Messdaten von dem Messgerät 50 abrufen. Auch kann eine Parametrierung des Messgeräts 50 über das Bediengerät 10 vorgenommen werden, wobei etwa Einstellwerte, wie z.B. die Dauer eines Messintervalls, ein Messzeitpunkt und/oder eine Messrate, von dem Bediengerät 10 an das Messgerät 50 übermittelt werden können.

Des Weiteren ist die Steuereinheit 22 dazu eingerichtet, nach Authentifizierung des Benutzers durch das Authentifizierungsmodul 20 die in dem Schlüsselverwaltungsmodul 18 hinterlegten Zugriffsinformationsdaten mit auf dem Server 200 hinterlegten Zugriffsinformationsdaten abzugleichen und/oder zu synchronisieren, wie in nachfolgenden Figuren im Detail erläutert. Das Bediengerät 10 ist somit dazu eingerichtet, sowohl eine Verbindung zum Messgerät 50 als auch eine Verbindung zum Server 200, etwa über ein Netzwerk und/oder das Internet, herzustellen, wobei es sich bei dem Netzwerk auch um ein WLAN und/oder eine mobile Verbindung (z.B. GPRS, LTE, 3G) handeln kann.

Funktionen des erfindungsgemäßen Bediengeräts 10 können dabei zumindest zum Teil in Form eines oder mehrerer Softwaremodule, z.B. als Client Software, realisiert sein. Für das Arbeiten mit dem Messgerät 50, etwa für eine Diagnose und/oder eine Konfiguration, werden häufig Anwenderprogramme oder Apps verwendet, wie z.B. PACTware mit DTM (device type manager) und/oder andere FDT-Frames wie FieldCare oder Fieldmate. Die Funktionen des erfindungsgemäßen Bediengeräts 10 können dabei derart implementiert sein, dass sie mit bereits vorhandenen Anwenderprogrammen und Apps zusammenarbeiten. Anwendungen und Apps können etwa das Schlüsselverwaltungsmodul 18 (oder eine Client Software mit dem Schlüsselverwaltungsmodul 18) auf dem Bediengerät 10 verwenden, in welchem alle Zugriffsinformationsdaten zu Messgeräten 50 für den jeweiligen Benutzer gespeichert werden. Zusätzlich können die Anwendungen und Apps in der Lage sein, auf dem Server 200, etwa in einer Server Software und/oder einer Datenbank, hinterlegte Zugriffsinformationsdaten ähnlich einem "remote" Server zur Synchronisation der Zugriffsinformationsdaten des Schlüsselverwaltungsmoduls 18 zu nutzen. Das erlaubt es dem Benutzer auf allen seinen Bediengeräten zu jedem Zeitpunkt konsistente Zugriffsinformationsdaten zu seinen Messgeräten bzw. Feldgeräten zur Verfügung zu haben. Um dies zu realisieren kann ferner vorgesehen sein, dass die Steuereinheit 22 bei einem initialen Verbindungsaufbau zu einem Messgerät 50 mit Authentifizierung und/oder Freischalten des Zugriffschutzes des Messgerätes 50, die jeweiligen Zugriffsinformationsdaten auf dem lokalen Bediengerät in dem Schlüsselverwaltungsmodul 18 speichert. Beim nächsten Verbinden des Bediengeräts 10 mit dem Server 200 können diese Zugriffsinformationsdaten dann auf den Server 200 geladen und dort gespeichert werden, beispielsweise in einem dem Benutzer zugeordneten Benutzerkonto, wie in nachfolgenden Figuren im Detail erläutert.

Fig. 2 illustriert einen Server 200 für eine Messanordnung 100 gemäß einem Ausführungsbeispiel der Offenbarung. Sofern nicht anders beschrieben, weist der Server 200 der Fig. 2 dieselben Elemente und Merkmale wie der Server 200 der Fig. 1 auf.

Der Server 200 weist ein Benutzerkontomodul 204 auf, in welchem ein für jeden von dem Server 200 verwalteten Benutzer ein Benutzerkonto hinterlegt ist. Jedem Benutzerkonto können wiederum beliebig viele Messgeräte 50 zugeordnet sein.

Weiter weist der Server 200 eine Datenbank 202 auf, in welcher Zugriffsinformationsdaten für sämtlich auf dem Server verwalteten Messgeräte 50 hinterlegt sind. Die Datenbank 202 kann auch Teil des Benutzerkontomoduls 204 sein. In der Datenbank kann eine Zuordnungstabelle mit Identifikationsnummer, Verbindungskennung, Zugriffskennung und/oder Typenbezeichnung für jedes Messgerät 50 hinterlegt sein.

Darüber hinaus verfügt der Server über ein Webservicemodul 206, welches etwa eine Web-API (Web Application Programme Interface) für eine auf dem Bediengerät 10 installierte App und/oder Anwendung sein kann. Das Webservicemodul 206 ist dazu eingerichtet, die Synchronisation der auf dem Server 200 hinterlegten Zugriffsinformationsdaten eines einem Benutzer zugeordneten Benutzerkontos mit den in dem Schlüsselverwaltungsmodul 18 des Bediengerätes 10 des Benutzers hinterlegten Zugriffsinformationsdaten zu gewährleisten. Mit anderen Worten kann der Server 200 mit dem Webservicemodul 206 eine API (bevorzugt als Webservice) anbieten, die über Anwendungen oder Apps auf dem Bediengerät 10 für die Synchronisation der Zugriffsinformationsdaten genutzt werden kann.

Über eine Schnittstelle 210 ist der Server ferner an das Internet und/oder ein Netzwerk angeschlossen.

Zur Verwendung eines erfindungsgemäßen Bediengerätes 10, muss der Benutzer des Bediengeräts 10 einmalig ein Benutzerkonto auf dem Server 200 angelegt haben. Der Server 200 weist dazu ein Webservermodul bzw. Benutzersteuermodul 208 auf, welches eine Benutzerschnittstelle (User Interface) für die Benutzerkontenverwaltung und/oder die Zugriffsinformationsdatenverwaltung darstellt. In dem Benutzersteuermodul 208 kann eine Softwarefunktion implementiert sein, die es jedem Internetbenutzer gestattet, dass er auf dem Server 200 ein Benutzerkonto mit seinen persönlichen Daten einrichtet. Das Benutzersteuermodul 208 kann eine grafische Bedienerschnittstelle für die Nutzung über einen Internetbrowser (z.B. Internet Explorer, Firefox, Chrome, usw.) anbieten. Das Benutzerkonto kann beispielsweise durch eine "Benutzername / Passwort" Kombination abgesichert sein. Es können für das Anlegen des Benutzerkontos auch weitere Sicherheitsschritte eingebaut werden, wobei beispielsweise vorgesehen sein kann, dass der Internetbenutzer seine E-Mail-Adresse angibt und einen Freischaltlink bestätigt, der an seine E-Mailadresse gesendet wurde.

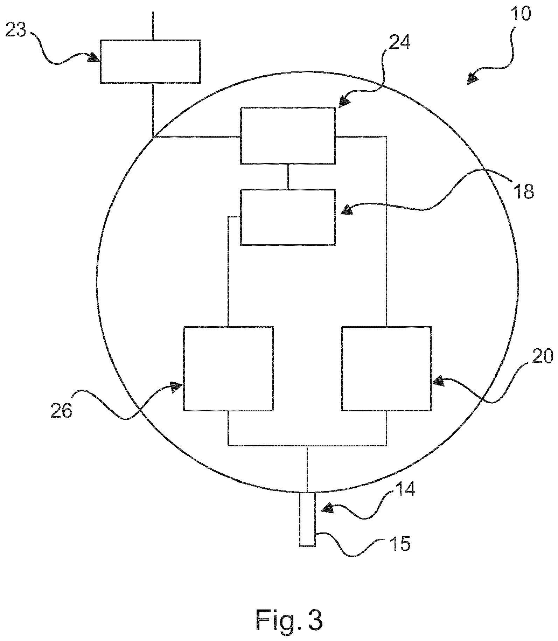

Fig. 3 illustriert ein Bediengerät 10 gemäß einem Ausführungsbeispiel der Offenbarung. Sofern nicht anders beschrieben, weist das Bediengerät 10 der Fig. 3 dieselben Elemente und Merkmale wie das Bediengerät 10 der Fig. 1 auf. Dabei illustriert Figur 3 die Implementierung von Funktionen des Bediengeräts 10 im Rahmen einer Client Software.

In der Regel werden Anwendungen (z. B. PACTware mit DTM) oder Apps (z. B. VEGA-Tools) zur Bedienung der Messgeräte 50 eingesetzt. Diese Anwendungen oder Apps können etwa in einem Modul 23 des Bediengeräts 10 hinterlegt und/oder ausgeführt sein.

Das Modul 23 kann beispielsweise über ein Schnittstellenmodul 24 mit dem Schlüsselverwaltungsmodul 18 und dem Authentifizierungsmodul 20 gekoppelt sein und/oder kommunizieren. Nach Eingabe der korrekten Benutzerkennung durch einen Benutzer können so die im Modul 23 ausgeführten Anwendungen/Apps zum Bedienen der Messgeräte 50 auf das Schlüsselverwaltungsmodul 18 zugreifen.

Zur Synchronisierung der im Schlüsselverwaltungsmodul 18 hinterlegten Zugriffsinformationsdaten mit den auf dem Server 200 hinterlegten Zugriffsinformationsdaten verfügt das Bediengerät 10 über ein Webservicemodul 26, welches als Web-API ausgeführt sein kann. Das Webservicemodul 26 des Bediengeräts 10 kann mit dem Webservicemodul 206 des Servers 200 kommunizieren und Zugriffsinformationsdaten austauschen.

Das Bediengerät 10 ist dazu eingerichtet das Benutzerkonto auf dem Server 200 zu unterstützen und/oder dort hinterlegte Zugriffsinformationsdaten abzurufen und/oder zu hinterlegen. Der Benutzer kann dazu auf dem jeweiligen Bediengerät 10 die Erlaubnis zur Nutzung des Serverdienstes erteilen bzw. diesen aktivieren. Das Bediengerät 10 überträgt dann nach Authentifizierung des Benutzers an dem Authentifizierungsmodul 20 lokal auf dem Bediengerät 10 in dem Schlüsselverwaltungsmodul 18 gespeicherte Zugriffsinformationsdaten zu Messgeräten 50 in das Benutzerkonto des Benutzers auf den Server 200. Alternativ oder zusätzlich werden Zugriffsinformationsdaten aus dem Benutzerkonto von dem Server 200 auf das Bediengerät 10 übertragen. Dadurch stehen auf allen Bediengeräten 10, auf denen das Benutzerkonto bekanntgegeben wird, alle Zugriffsinformationsdaten zu den Messgeräten 50 des Benutzers zur Verfügung. Fällt ein Bediengerät 10 etwa durch Defekt aus oder wird durch ein anderes ersetzt, so muss dem neuen Bediengerät nur das Benutzerkonto bekanntgegeben werden, und alle Messgeräte 50 können ohne aufwändiges Recherchieren der Zugriffsinformationsdaten wieder bedient werden.

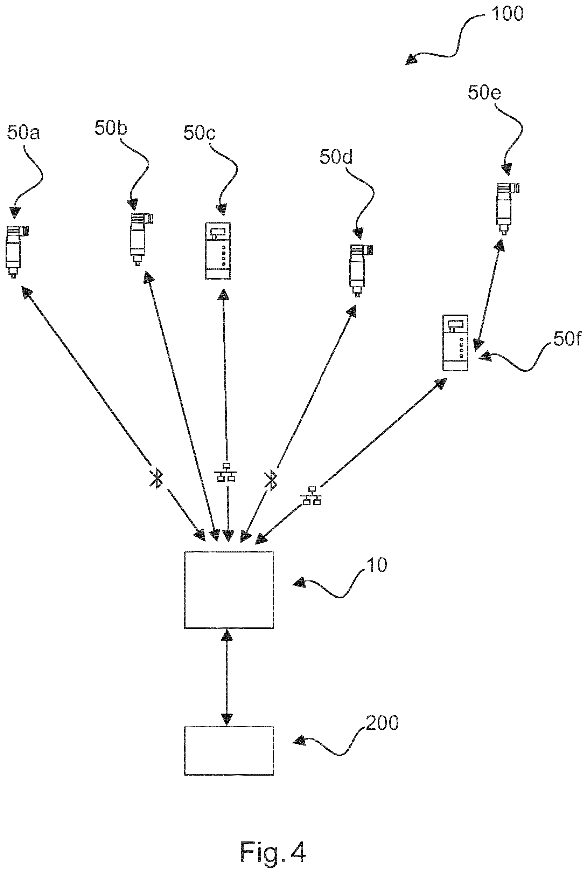

Fig. 4 zeigt eine Messanordnung 100 gemäß einem Ausführungsbeispiel der Offenbarung. Sofern nicht anders beschrieben, weist die Messanordnung 100 der Fig. 4 dieselben Elemente und Merkmale wie in voranstehend erläuterten Figuren auf.

Die Messanordnung 100 verfügt über insgesamt vier Messgeräte bzw. Feldgeräte 50a, 50b, 50d und 50e sowie ein Auswertegerät 50c auf, auf welchem wiederum Messdaten weiterer Feldgeräte bzw. Messgeräte hinterlegt sein können. Das Feldgerät 50e ist ebenso über ein Auswertegerät 50f mit dem Bediengerät 10 gekoppelt, wobei das Auswertegerät 50f ein Bindeglied zwischen Bediengerät 10 und Messgerät 50e darstellt.

Für einen Zugriff auf Feldgeräte, Messgeräte und/oder Auswertegeräte 50a-50f müssen auf dem Bediengerät 10 eine Vielzahl von Zugriffsinformationsdaten hinterlegt sein, wie im Folgenden näher erläutert.

Feldgerät 50a ist beispielsweise über eine Bluetoothverbindung mit dem Bediengerät 10 verbunden. Für einen Zugriff auf Feldgerät 50a, d.h. etwa um einen Parameter des Feldgerätes 50a zu ändern, es freizugeben und/oder es zu sperren, sind für das Feldgerät 50a eine vierstellige PIN als Verbindungskennung und eine vierstellige PIN als Zugriffskennung auf dem Bediengerät 10 hinterlegt.

Feldgerät 50b ist über einen Feldbus mit dem Bediengerät 10 verbunden. Für Feldgerät 50b ist daher lediglich eine beispielsweise vierstellige PIN als Zugriffskennung auf dem Bediengerät 10 hinterlegt.

Auswertegerät 50c ist über eine Netzwerkverbindung mit dem Bediengerät 10 verbunden. Für einen Zugriff auf das Auswertegerät 50c, d.h. etwa um einen Parameter zu lesen, für eine Freigabe und/oder ein Sperren des Auswertegeräts 50c, sind ein zwanzigstelliger PSK-Schlüssel als Verbindungskennung und eine sechsstellige bis zwanzigstellige Zugriffskennung auf dem Bediengerät 10 hinterlegt. Für eine Vorort-Bedienung von an die Auswerteeinheit 50c angeschlossenen Feldgeräten kann eine weitere Zugriffskennung in dem Bediengerät 10 hinterlegt sein.

Feldgerät 50d ist ebenso über eine Bluetoothverbindung mit dem Bediengerät 10 verbunden. Für einen Zugriff auf Feldgerät 50d sind daher eine vierstellige PIN als Verbindungskennung und eine Zugriffskennung mit Benutzernamen und Passwort, z.B. sechs bis zwanzig Zeichen, auf dem Bediengerät 10 hinterlegt.

Feldgerät 50e ist über einen Feldbus an das Auswertegerät 50f und dieses wiederum über eine Netzwerkverbindung mit dem Bediengerät 10 verbunden. Auf dem Bediengerät 10 sind daher eine zwanzigstellige Verbindungskennung, eine Benutzernamen-Passwort-Kombination als Zugriffskennung für das Auswertegerät 50 und eine weitere vierstellige PIN als Zugriffskennung für das Feldgerät 50e hinterlegt.

Sämtliche voranstehend erläuterten Zugriffsinformationsdaten sind erfindungsgemäß auf dem Bediengerät 10 hinterlegt und werden mit auf dem Server 200 in einem Benutzerkonto hinterlegten Zugriffsinformationsdaten synchronisiert.

Zusammenfassend veranschaulicht Figur 4, welche Vielzahl an Zugriffsinformationsdaten bereits bei wenigen Feldgeräten zu verwalten ist. Beispielsweise kann es erforderlich sein, dass zur Kommunikation mit einem Feldgerät eine vierstellige PIN zur Authentifizierung einer Bluetooth-Verbindung eingegeben wird. Um dann tatsächlich Einstellwerte im Feldgerät ändern zu dürfen, kann mit einer weiteren vierstelligen PIN die Bedienung freigegeben werden. Messgeräte bzw. Feldgeräte neuerer Generation benötigen überdies für die Authentifizierung z. B. 20-stellige PSK Codes (PreSharedKeys). Wieder andere Messgeräte bzw. Feldgeräte bieten im Feldgerät selber eine weitere Benutzerverwaltung, die es gestattet, verschiedene Rechte für die Feldgerätbedienung zu steuern. Derartige Geräte erfordern dann entsprechend für das Freischalten der Bedienung die Angabe eines Benutzers mit Passwort.

Die Messanordnung 100 kann wie folgt durch einen Benutzer genutzt und/oder von diesem verwendet werden. Um mit einem Messgerät 50, 50a-f zu arbeiten, z.B. zum Abrufen von Messdaten, kann auf dem Bediengerät 10 eine Anwendung oder eine App gestartet werden. In der App bzw. Anwendung wurde einmalig das zu verwendende Benutzerkonto des Benutzers angegeben. Die Anwendung bzw. App scannt nach Messgeräten, wobei die Identifikationsnummern der in Reichweite des Bediengeräts 10 befindlichen Messgeräte 50, 50a-f ermittelt werden können, da z.B. eine Seriennummer und/oder ein Feldgerätetyp bzw. eine Typenbezeichnung immer von den Messgeräten beantwortet werden. Die Anwendung prüft im lokalen Speicher 19 des Schlüsselverwaltungsmodul 18, ob Zugriffsinformationsdaten, d.h. Verbindungskennung und Zugriffskennung, für die Messgeräte 50, 50a-f vorhanden sind. Wenn dies der Fall ist, werden diese Zugriffsinformationsdaten automatisch verwendet und der Benutzer kann unmittelbar mit der Diagnose an den entsprechenden Messgeräte 50, 50a-f beginnen. Liegen die Zugriffsinformationsdaten nicht im Schlüsselverwaltungsmodul 18 vor, wird der Benutzer zur Eingabe der Verbindungskennung aufgefordert und bei korrekter Eingabe in einem weiteren Schritt zur Eingabe der Zugriffskennung für die Gerätebedienung aufgefordert. Die beiden Zugriffsinformationsdaten werden zusammen mit der Identifikationsnummer des Messgerätes (z.B. Seriennummer des Feldgeräts) an das Schlüsselverwaltungsmodul 18 übergeben und im Speicher 19 für Zugriffsinformationsdaten gespeichert. Optional kann im Speicher 19 für Zugriffsinformationsdaten zu jeder Identifikationsnummer auch ein Zeitstempel, d.h. der Zeitpunkt der Speicherung, abgelegt werden. Alternativ oder zusätzlich kann auch ein anderes eindeutiges Identifizierungsmerkmal verwendet werden.

Eine Synchronisation mit dem Server 200 kann wie folgt zusammengefasst erfolgen. Die Client Software auf dem Bediengerät 10 kann entweder im Hintergrund eines Betriebssystems des Bediengeräts 10 laufen oder auch direkt an die Anwendung bzw. App zum Bedienen der Messgeräte 50, 50a-f gekoppelt sein und nur dann aktiv werden, wenn die App bzw. die Anwendung gestartet ist. Das Schlüsselverwaltungsmodul 18 des Bediengeräts 10 kann nach der Durchführung von Änderungen über das Webservicemodul 26 eine Verbindung zum Server 200 bzw. dem Webservicemodul 206 des Servers 200 aufnehmen. Ist gerade keine Verbindung möglich, erfolgt die Synchronisation bei der nächsten Gelegenheit. Bei der Verbindungsaufnahme identifiziert sich das Bediengerät 10 bzw. die Clientsoftware mit dem lokal auf dem Bediengerät 10 angemeldeten Benutzerkonto damit die Server Software die Authentizität überprüfen kann. D.h. die Benutzerkennung wird an den Server 200 übermittelt. Über das Webservicemodul 206 des Servers 200 und das Webservicemodul 26 des Bediengeräts 10 werden im Anschluss die Zugriffsinformationsdaten in der Datenbank 202 des angemeldeten Benutzers auf dem Server 200 mit den Zugriffsinformationsdaten des Schlüsselverwaltungsmoduls 18 des Bediengerätes 10 verglichen. Zur Überprüfung werden in einem ersten Durchlauf die Identifikationsnummern verglichen. In einem zweiten Durchlauf werden dann die Zeitstempel (bzw. ein anderes Identifizierungsmerkmal) verglichen, wobei die Zugriffsinformationsdaten mit dem neueren Zeitstempel als gültig gewertet werden und sowohl für das Bediengerät 10 als auch für den Server 200 übernommen werden, d.h. ältere Zugriffsinformationsdaten werden mit den aktuellen ersetzt.

Um den heutigen Sicherheitsaspekten für Internetkommunikation gerecht zu werden, können die Zugriffsinformationsdaten verschlüsselt in dem Bediengerät 10 und/oder dem Server 200 abgelegt werden. Zusätzlich können für das Abspeichern speziell der PSK bzw. anderen Zugriffsinformationsdaten auch anstelle der Originalschlüssel deren Hashwerte abgelegt und ausgetauscht werden.

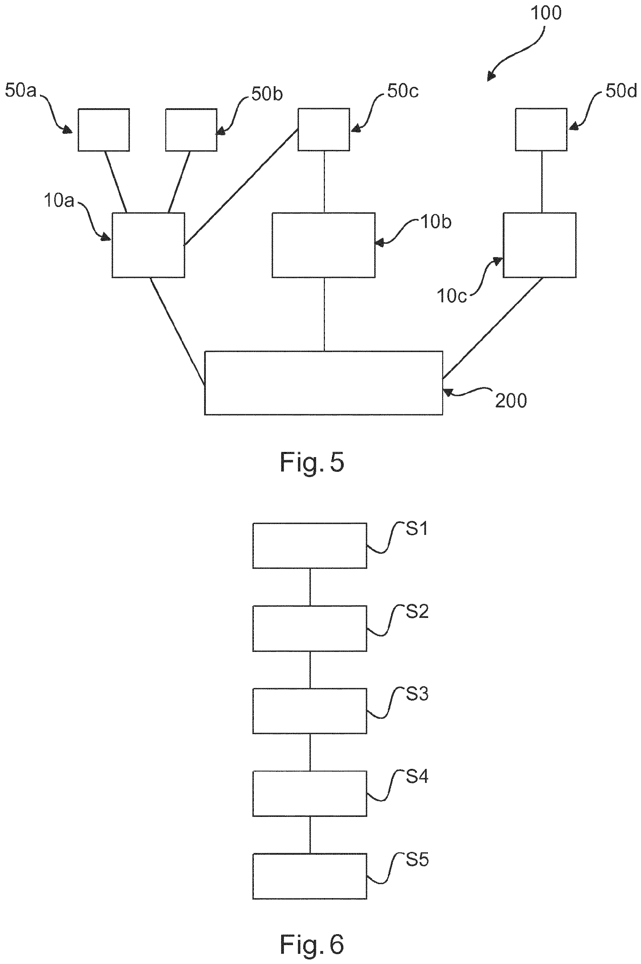

Fig. 5 zeigt eine Messanordnung 100 gemäß einem Ausführungsbeispiel der Offenbarung. Sofern nicht anders beschrieben, weist die Messanordnung 100 der Fig. 5 dieselben Elemente und Merkmale wie in voranstehend erläuterten Figuren auf.

Die Messanordnung 100 der Fig. 5 weist insgesamt drei Bediengeräte 10a, 10b, 10c auf, welche jeweils von einem Benutzer verwendet werden. Mit Bediengerät 10a werden Messgeräte 50a, 50b, 50c bedient, mit Bediengerät 10b wird Messgerät 50c bedient und mit Bediengerät 10c wird Messgerät 50d bedient.

Auf dem Server 200 ist für jeden Benutzer der drei Bediengeräte 10a-10c ein Benutzerkonto hinterlegt, in welchem die dem Benutzer zugeordneten Messgeräte 50a-50d verwaltet und die zugehörigen Zugriffsinformationsdaten hinterlegt sind.

Fig. 6 zeigt ein Flussdiagramm zur Illustration von Schritten eines Verfahrens zum Bedienen eines Messgeräts 50 gemäß einem Ausführungsbeispiel der Offenbarung.

In einem ersten Schritt S1 wird ein Benutzer an dem Bediengerät 10 mittels einer Benutzerkennung authentifiziert. Schritt S1 kann daher die Eingabe einer Benutzerkennung durch den Benutzer und einen Vergleich der eingegebenen Benutzerkennung mit einer auf dem Bediengerät 10 hinterlegten Benutzerkennung umfassen. In einem weiteren Schritt S2 wird mit dem Bediengerät 10 eine Identifikationsnummer des Messgeräts 50 ermittelt. Schritt S2 kann ein Durchsuchen einer Umgebung des Bediengeräts 10 nach in Reichweite befindlichen Messgeräten 50 umfassen. In einem weiteren Schritt S3 werden von in einem Schlüsselverwaltungsmodul 18 des Bediengeräts 10 hinterlegten und dem Messgerät 50 zugeordneten Zugriffsinformationsdaten mit auf einem Server 200 hinterlegten Zugriffsinformationsdaten abgeglichen, wobei zum Abgleichen der Zugriffsinformationsdaten die Benutzerkennung und die Identifikationsnummer des Messgeräts 50 von dem Bediengerät 10 an den Server 200 übermittelt werden. In einem weiteren Schritt S4 wird eine Kommunikationsverbindung zwischen dem Bediengerät 10 und dem Messgerät 50 hergestellt. In einem weiteren Schritt S5 werden Diagnosedaten, beispielsweise Einstellwerte und/oder Parameterwerte, des Messgeräts 50 mit dem Bediengerät 10 abgerufen bzw. an das Bediengerät 10 übermittelt.

Ergänzend sei darauf hingewiesen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zum Bedienen eines Messgeräts (50) mit einem Bediengerät (10), welches ein Füllstandmessgerät, ein Durchflussmessgerät, ein Dichtemessgerät und/oder ein Druckmessgerät ist, das Verfahren aufweisend:
Authentifizieren, an dem Bediengerät (10), eines Benutzers mittels einer Benutzerkennung;
Ermitteln, mit dem Bediengerät (10), einer Identifikationsnummer des Messgeräts (50);
Abgleichen von in einem Schlüsselverwaltungsmodul (18) des Bediengeräts (10) hinterlegten und dem Messgerät (50) zugeordneten Zugriffsinformationsdaten mit auf einem Server (200) hinterlegten Zugriffsinformationsdaten, wobei zum Abgleichen der Zugriffsinformationsdaten die entsprechenden Zeitstempel verglichen werden und ermittelt wird, welche der Zugriffsinformationsdaten aktueller sind und die zeitälteren Zugriffsinformationsdaten mit den aktuellen ersetzt werden, wobei die Zugriffsinformationsdaten eine Zugriffskennung für eine Freigabe des Messgeräts (50) umfassen, so dass Daten von dem Messgerät (50) abgerufen und/oder in dem Messgerät (50) gespeichert werden können,
wobei zum Abgleichen der Zugriffsinformationsdaten die Benutzerkennung und die Identifikationsnummer des Messgeräts (50) von dem Bediengerät (10) an den Server (200) übermittelt werden;
Herstellen einer Kommunikationsverbindung zwischen dem Bediengerät (10) und dem Messgerät (50) und Freigabe des Messgeräts (50) mittels der Zugriffsinformationsdaten; und
Abrufen von Diagnosedaten des Messgeräts (50) mit dem Bediengerät (10). CGS:CHP

2. Bediengerät (10) zum Bedienen eines Messgeräts (50), welches ein Füllstandmessgerät, ein Durchflussmessgerät, ein Dichtemessgerät und/oder ein Druckmessgerät ist, das Bediengerät aufweisend:
eine Kommunikationsanordnung (12), welche ein erstes Kommunikationsmodul (14) zur Kommunikation des Bediengeräts (10) mit einem Server (200) und ein zweites Kommunikationsmodul (16) zur Kommunikation des Bediengeräts (10) mit dem Messgerät (50) aufweist;
ein Schlüsselverwaltungsmodul (18), in welchem Zugriffsinformationsdaten für einen Zugriff des Bediengeräts (10) auf das Messgerät (50) hinterlegt sind, wobei die Zugriffsinformationsdaten eine Zugriffskennung für eine Freigabe des Messgeräts (50) umfassen, so dass Daten von dem Messgerät (50) abgerufen und/oder in dem Messgerät (50) gespeichert werden können;
ein Authentifizierungsmodul (20) zur Authentifizierung eines Benutzers des Bediengeräts (10) mittels einer Benutzerkennung; und
eine Steuereinheit (22);
wobei das Bediengerät dazu eingerichtet ist, das Verfahren nach Anspruch 1 durchzuführen.

3. Bediengerät (10) nach Anspruch 2,
wobei die Steuereinheit (22) dazu eingerichtet ist, bei einem erstmaligen Verbinden des Bediengeräts (10) mit dem Messgerät (50), die Zugriffsinformationsdaten für das Messgerät (50) in dem Schlüsselverwaltungsmodul (18) zu hinterlegen.

4. Bediengerät (10) nach einem der Ansprüche 2 bis 3,
wobei die Zugriffsinformationsdaten eine Verbindungskennung zum Herstellen einer Kommunikationsverbindung zwischen dem Bediengerät (10) und dem Messgerät (50) umfassen.

5. Bediengerät (10) nach einem der Ansprüche 2 bis 4,
wobei die Steuereinheit (22) dazu eingerichtet ist, basierend auf einer Identifikationsnummer und/oder basierend auf einer Typenbezeichnung des Messgeräts (50) die dem Messgerät (50) zugeordneten Zugriffsinformationsdaten in dem Schlüsselverwaltungsmodul (18) zu ermitteln.

6. Bediengerät (10) nach einem der Ansprüche 2 bis 5, wobei die Steuereinheit (22) ferner dazu eingerichtet ist:
- zu ermitteln, ob sich das Messgerät (50) in Reichweite des Bediengeräts (10) befindet;
- eine Identifikationsnummer und/oder eine Typenbezeichnung des Messgeräts (50) zu ermitteln;
- automatisch die dem Messgerät (50) zugeordneten Zugriffsinformationsdaten an das Messgerät (50) zu übermitteln; und
- Diagnosedaten zur Diagnose des Messgeräts (50) von dem Messgerät abzurufen.

7. Bediengerät (10) nach einem der Ansprüche 2 bis 6,
wobei die Steuereinheit (22) dazu eingerichtet ist, eine Parametrierung des Messgeräts (50) vorzunehmen und/oder Messdaten von dem Messgerät (50) abzurufen.

8. Messanordnung (100) zum Erfassen von Füllstandmesswerten, Druckmesswerten oder Durchflussmesswerten, aufweisend:
ein Bediengerät (10) nach einem der Ansprüche 2 bis 7;
eine Mehrzahl von Messgeräten (50), welche ein Füllstandmessgerät, ein Durchflussmessgerät und/oder ein Druckmessgerät umfassen; und
einen Server (200),
wobei der Server (200) ein Benutzerkontomodul (204) aufweist, in welchem ein Benutzerkonto hinterlegt ist, welches einem Benutzer des Bediengeräts (10) zugeordnet ist und in welchen Zugriffsinformationsdaten für die dem Benutzer zugeordneten Messgeräte (50) gespeichert sind.

9. Messanordnung (100) nach Anspruch 8,
wobei die Steuereinheit (22) des Bediengeräts dazu eingerichtet ist, die Benutzerkennung des Benutzers des Bediengeräts (10) an den Server (200) zu übermitteln; und
wobei der Server (200) dazu eingerichtet ist, das dem Benutzer zugeordnete Benutzerkonto freizugeben und sämtliche in dem Benutzerkonto hinterlegten Zugriffsinformationsdaten an das Bediengerät (10) zu übermitteln.

10. Messanordnung (100) nach einem der Ansprüche 8 oder 9,
wobei der Server (200) ein Benutzersteuermodul (208) mit einer Benutzerschnittstelle aufweist, welches dazu eingerichtet ist, die Benutzerkonten zu verwalten und/oder zu konfigurieren.

11. Verwendung eines Bediengeräts (10) nach einem der Ansprüche 2 bis 7 zum Bedienen eines Füllstandmessgeräts, eines Durchflussmessgeräts, eines Dichtemessgeräts und/oder eines Druckmessgerätes.

12. Programmelement, das, wenn es auf einer Steuereinheit (22) eines Bediengeräts (10) nach einem der Ansprüche 2 bis 7 ausgeführt wird, das Bediengerät (10) anweist, die Schritte des Verfahrens nach Anspruch 1 auszuführen.

13. Computerlesbares Medium, auf dem ein Programmelement nach Anspruch 12 gespeichert ist.

## Claims

1. Method for operating a measuring device (50) with an operating device (10), which is a level measuring device, a flow measuring device, a density measuring device and/or a pressure measuring device, the method comprising:
authenticating, on the operating device (10), a user by a user ID;
determining, with the operating device (10), an identification number of the measuring device (50);
comparing access information data stored in a key management module (18) of the operating device (10) and assigned to the measuring device (50) with access information data stored on a server (200);
wherein for the comparing of the access information data the respective time stamp are compared and it is determined which of the access information data are current and the older access information data are replaced by the current ones,
wherein the access information data include an access identifier for an enabling of the measuring device (50), such that data of the measuring device (50) can be retrieved and/or stored in the measuring device (50),
wherein for the comparing of the access information data the user ID and the identification number of the measuring device (50) are transmitted from the operating device (10) to the server (200);
establishing a communication connection between the operating device (10) and the measuring device (50) and an enabling of the measuring device (50) by the access information data; and
retrieving diagnostic data of the measuring device (50) with the operating device (10).

2. Operating device (10) for operating a measuring device (50), which is a level measuring device, a flow measuring device, a density measuring device and/or a pressure measuring device, the operating device comprising:
a communication arrangement (12) which comprises a first communication module (14) for communication between the operating device (10) with server (200) and a second communication module (16) for communication between the operating device (10) with the measuring device (50);
a key management module (18) in which access information data for an access of the operating device (10) to the measuring device (50) are stored;
wherein the access information data include an access identifier for an enabling of the measuring device (50), such that data of the measuring device (50) can be retrieved and/or stored in the measuring device (50);
an authentication module (20) for authenticating a user of the operating device (10) by a user ID; and
a control unit (22);
wherein the measuring device (50) is set up to carry out the method according to claim 1.

3. Operating device (10) according to claim 2,
wherein the control unit (22) is set up to, when the operating device (10) is connected to the measuring device (50) for the first time, deposit the access information data for the measuring device (50) in the key management module (18).

4. Operating device (10) according to one of the claims 2 to 3,
wherein the access information data comprises a connection identifier for establishing a communication connection between the operating device (10) and the measuring device (50).

5. Operating device (10) according to one of the claims 2 to 4,
wherein the control unit (22) is set up, based on an identification number and/or based on a type designation of the measuring device (50) to investigate the access information data assigned to the measuring device (50) in the key management module (18).

6. Operating device (10) according to one of the claims 2 to 5, wherein the control unit (22) is further set up to:
- to determine whether the measuring device (50) is within range of the operating device (10);
- to determine an identification number and/or a type designation of the measuring device (50);
- to automatically transmit the access information data assigned to the measuring device (50) to the measuring device (50); and
- retrieve diagnostic data for diagnosing the measuring device (50) from the measuring device.

7. Operating device (10) according to one of the claims 2 to 6,
wherein the control unit (22) is set up to carry out a parametrization of the measuring device (50) and/or to retrieve measurement data from the measuring device (50).

8. Measuring arrangement (100) for detecting measured fill level values, measured pressure values or measured flow values, comprising:
an operating device (10) according to one of the claims 2 to 7;
a plurality of measuring devices (50), which include a level measuring device, a flow measuring device and/or a pressure measuring device; and
a server (200),
wherein the server (200) comprises a user account module (204) in which a user account is stored which is assigned to a user of the operating device (10) and in which access information data for the measuring devices (50) assigned to the user are stored.

9. Measuring arrangement (100) according to claim 8,
wherein the control unit (22) of the operating device is set up to transmit the user ID of the user of the operating device (10) to the server (200); and wherein the server (200) is set up to release the user account assigned to the user and to transmit all access information data stored in the user account to the operating device (10).

10. Measuring arrangement (100) according to one of claims 8 or 9,
wherein the server (200) comprises a user control module (208) with a user interface, which is set up to manage and/or configure the user accounts.

11. Use of an operating device (10) according to one of claims 2 to 7 for operating a filling level measuring device, a flow measuring device, a density measuring device and/or a pressure measuring device.

12. Program element which, when executed on a control unit (22) of an operating device (10) according to one of the claims 2 to 7, instructs the operating device (10) to carry out the steps of the method according to claim 1.

13. Computer-readable medium being stored on a program element according to claim 12.

## Revendications

1. Procédé de commande d'un appareil de mesure (50) avec un appareil de commande (10), qui est un appareil de mesure de niveau de remplissage, un débitmètre, un densimètre et/ou un manomètre, le procédé comportant :
l'authentification, sur l'appareil de commande (10), d'un utilisateur au moyen d'un identifiant d'utilisateur ;
la détermination, avec l'appareil de commande (10), d'un numéro d'identification de l'appareil de mesure (50) ;
la comparaison de données d'informations d'accès mémorisées dans un module de gestion de clés (18) de l'appareil de commande (10) et associées à l'appareil de mesure (50) avec des données d'informations d'accès mémorisées sur un serveur (200), dans lequel, pour la comparaison des données d'informations d'accès, les horodatages correspondants sont comparés et il est déterminé quelles données d'informations d'accès sont plus actuelles et les données d'informations d'accès plus anciennes sont remplacées par les données d'informations d'accès actuelles,
dans lequel les données d'informations d'accès comprennent un identifiant d'accès pour un déblocage de l'appareil de mesure (50), de telle sorte que des données peuvent être appelées par l'appareil de mesure (50) et/ou enregistrées dans l'appareil de mesure (50),
dans lequel, pour la comparaison des données d'informations d'accès, l'identifiant d'utilisateur et le numéro d'identification de l'appareil de mesure (50) sont transmis de l'appareil de commande (10) au serveur (200) ;
l'établissement d'une connexion de communication entre l'appareil de commande (10) et l'appareil de mesure (50) et le déblocage de l'appareil de mesure (50) au moyen des données d'informations d'accès ; et
l'appel de données de diagnostic de l'appareil de mesure (50) avec l'appareil de commande (10).

2. Appareil de commande (10) destiné à la commande d'un appareil de mesure (50), qui est un appareil de mesure de niveau de remplissage, un débitmètre, un densimètre et/ou un manomètre, l'appareil de commande comportant :
un ensemble de communication (12), qui comporte un premier module de communication (14) pour la communication de l'appareil de commande (10) avec un serveur (200) et un second module de communication (16) pour la communication de l'appareil de commande (10) avec l'appareil de mesure (50) ;
un module de gestion de clés (18), dans lequel sont mémorisées des données d'informations d'accès pour un accès de l'appareil de commande (10) à l'appareil de mesure (50), les données d'informations d'accès comprenant un identifiant d'accès pour un déblocage de l'appareil de mesure (50), de telle sorte que des données peuvent être appelées par l'appareil de mesure (50) et/ou enregistrées dans l'appareil de mesure (50) ;
un module d'authentification (20) destiné à l'authentification d'un utilisateur de l'appareil de commande (10) au moyen d'un identifiant d'utilisateur ; et
une unité de commande (22) ;
l'appareil de mesure étant conçu pour exécuter le procédé selon la revendication 1.

3. Appareil de commande (10) selon la revendication 2,
dans lequel l'unité de commande (22) est conçue pour, lors d'une première connexion de l'appareil de commande (10) à l'appareil de mesure (50), mémoriser les données d'informations d'accès pour l'appareil de mesure (50) dans le module de gestion de clés (18).

4. Appareil de commande (10) selon l'une des revendications 2 à 3,
dans lequel les données d'informations d'accès comprennent un identifiant de connexion pour établir une connexion de communication entre l'appareil de commande (10) et l'appareil de mesure (50).

5. Appareil de commande (10) selon l'une des revendications 2 à 4,
dans lequel l'unité de commande (22) est conçue pour, sur la base d'un numéro d'identification et/ou sur la base d'une indication de type de l'appareil de mesure (50), déterminer les données d'informations d'accès associées à l'appareil de mesure (50) dans le module de gestion de clés (18).

6. Appareil de commande (10) selon l'une des revendications 2 à 5, dans lequel l'unité de commande (22) est en outre conçue pour :
- déterminer si l'appareil de mesure (50) se trouve dans le rayon d'action de l'appareil de commande (10) ;
- déterminer un numéro d'identification et/ou une indication de type de l'appareil de mesure (50) ;
- transmettre automatiquement à l'appareil de mesure (50) les données d'informations d'accès associées à l'appareil de mesure (50) ; et
- appeler des données de diagnostic provenant de l'appareil de mesure pour le diagnostic de l'appareil de mesure (50).

7. Appareil de commande (10) selon l'une des revendications 2 à 6,
dans lequel l'unité de commande (22) est conçue pour effectuer un paramétrage de l'appareil de mesure (50) et/ou appeler des données de mesure provenant de l'appareil de mesure (50).

8. Ensemble de mesure (100) destiné à détecter des valeurs de mesure de niveau de remplissage, des valeurs de mesure de pression ou des valeurs de mesure de débit, comportant :
un appareil de commande (10) selon l'une des revendications 2 à 7 ;
une pluralité d'appareils de mesure (50), qui comprennent un appareil de mesure de niveau de remplissage, un débitmètre et/ou un manomètre ; et
un serveur (200),
dans lequel le serveur (200) comporte un module de compte utilisateur (204), dans lequel est mémorisé un compte utilisateur, qui est associé à un utilisateur de l'appareil de commande (10) et dans lequel sont enregistrées des données d'informations d'accès pour les appareils de mesure (50) associés à l'utilisateur.

9. Ensemble de mesure (100) selon la revendication 8,
dans lequel l'unité de commande (22) de l'appareil de commande est conçue pour transmettre l'identifiant d'utilisateur de l'utilisateur de l'appareil de commande (10) au serveur (200) ; et
dans lequel le serveur (200) est conçu pour débloquer le compte utilisateur associé à l'utilisateur et transmettre toutes les données d'informations d'accès mémorisées dans le compte utilisateur à l'appareil de commande (10).

10. Ensemble de mesure (100) selon l'une des revendications 8 ou 9,
dans lequel le serveur (200) comporte un module de commande utilisateur (208) avec une interface utilisateur, qui est conçu pour gérer et/ou configurer les comptes utilisateurs.

11. Utilisation d'un appareil de commande (10) selon l'une des revendications 2 à 7 pour commander un appareil de mesure de niveau de remplissage, un débitmètre, un densimètre et/ou un manomètre.

12. Élément de programme qui, quand il est exécuté sur une unité de commande (22) d'un appareil de commande (10) selon l'une des revendications 2 à 7, donne des instructions à l'appareil de commande (10) afin qu'il exécute les étapes du procédé selon la revendication 1.

13. Support lisible par ordinateur, sur lequel est enregistré un élément de programme selon la revendication 12.
